# EUROPÄISCHE PATENTSCHRIFT

(11) **EP 1 719 938 B1**
(45) Veröffentlichungstag und Bekanntmachung des Hinweises auf die Patenterteilung: **10.09.2008**
(21) Anmeldenummer: 05405328.5
(22) Anmeldetag: 02.05.2005
(51) Int. Cl.: F16K 31/00

(54) **Thermostatkopf**
Thermostatic head
Tête thermostatique

(43) Veröffentlichungstag der Anmeldung: 08.11.2006
(73) Patentinhaber: Schnyder-Energie, 9552 Bronschofen (CH)
(72) Erfinder: Schnyder, Jürg, 9500 Wil (CH)
(74) Vertreter: Roshardt, Werner Alfred

(56) Entgegenhaltungen:
- DE-A1- 3 101 560
- DE-A1- 3 521 188
- DE-A1- 4 344 773
- DE-A1- 10 049 328
- DE-A1- 10 065 098

## Beschreibung

### Technisches Gebiet

Die Erfindung betrifft einen Themostatkopf gemäß Oberbegriff von Anspruch 1.

Ein derartiger Themostatkopf ist beispielsweise aus DE-A-10049328 bekannt.

### Stand der Technik

Der Mensch lebt gern in Räumen, welche eine den jeweiligen darin ausgeführten Tätigkeiten entsprechende Temperatur aufweisen. Vielfach stellt sich in einem Raum aufgrund verschiedenster Faktoren jedoch eine andere als die gewünschte Temperatur ein, beispielsweise weil die Temperatur der Umgebung höher oder tiefer als die Solltemperatur liegt, weil der Raum selber Wärmequellen oder Wärmesenken aufweist oder weil sich die Temperatur aufgrund von sonstigem Wärmezufluss oder -verlust ändert. Um solche unerwünschten Temperaturänderungen zu vermeiden und einen Raum auf die gewünschte Temperatur zu bringen, werden Räume häufig beheizt oder gekühlt, wobei das Heiz- bzw. Kühlsystem häufig über die Möglichkeit verfügt, eine gewünschte Solltemperatur einzustellen. Der Raum wird dann solange beheizt oder gekühlt, bis die Solltemperatur erreicht wird. Ist die Solltemperatur erreicht, wird diese möglichst gehalten, indem der Raum je nach Bedarf weiter gekühlt oder beheizt wird. Die entsprechenden Regelsysteme sind derart ausgebildet, dass die Solltemperatur unter normalen Umständen, d. h. bei nicht allzu schnellen und grossen Temperaturänderungen korrekt nachgeregelt werden kann.

Eine Möglichkeit zum Beheizen von Räumen sind Zentralheizungen, bei welchen eine Heizflüssigkeit, beispielsweise Wasser erwärmt und durch entsprechende Wärmetauscher in die zu beheizenden Räume geleitet wird. Die Erwärmung erfolgt beispielsweise in einem Heizkessel und als Wärmetauscher dienen beispielsweise Heizkörper an der Wand oder im Boden des zu beheizenden Raumes. Im Wärmetauscher wird die Wärmeenergie der Heizflüssigkeit an die Raumluft abgegeben. Dadurch wird die Raumluft und damit auch der Raum entsprechend aufgeheizt. Vom Wärmetauscher fliesst die Heizflüssigkeit in einem geschlossenen Kreislauf zurück zum Heizkessel. Danach beginnt der Kreislauf wieder von vorn. Wie die Heizflüssigkeit zentral erwärmt wird, ist im Prinzip unerheblich. Hierfür können beispielsweise auch Wärmepumpen, Solarsysteme oder andere Möglichkeiten zum Aufheizen einer Flüssigkeit verwendet werden.

Zur Regelung der Heizleistung umfassen solche Systeme typischerweise ein Ventil im Zu- oder Abfluss der Heizflüssigkeit zum bzw. vom Wärmetauscher sowie einen Thermostatkopf, der auf das Ventil aufgesetzt wird und der das Ventil in Abhängigkeit der herrschenden Raumtemperatur und der eingestellten Solltemperatur öffnet bzw. schliesst. Solche Ventile umfassen eine Feder, sodass ein Ventil im Ruhezustand, d. h. ohne Krafteinwirkung in Richtung des Ventils, beispielsweise ohne einen aufgesetzten Thermostatkopf, geöffnet ist. Ist ein Thermostatkopf aufgesetzt und ist beim Heizbetrieb die Raumtemperatur niedriger als die am Thermostatkopf eingestellte Solltemperatur, bleibt das Ventil (zumindest teilweise) geöffnet. Steigt die Raumtemperatur, wird das Ventil mehr und mehr geschlossen, bis es vollständig geschlossen ist, wenn die Raumtemperatur die Solltemperatur erreicht oder gar höher als diese wird. Zum korrekten Schliessen bzw. Öffnen des Ventils umfasst ein solcher Thermostatkopf ein Dehnstoffelement, beispielsweise ein bestimmtes Flüssigkeitsvolumen oder einen Festkörper, welcher sich unter Wärmeeinwirkung ausdehnt. Durch die Ausdehnung des Dehnstoffelements wird ein Stössel in Richtung des Ventils bewegt und auf diese Art und Weise das Ventil ganz oder teilweise schliesst. Fällt die Temperatur in der Umgebung des Thermostatkopfs ab, fällt auch die Temperatur des Dehnstoffelements und dieses zieht sich infolgedessen wieder zusammen. Dadurch bewegt sich der Stössel vom Ventil weg und gibt dieses frei, sodass sich das Ventil dank der Feder wieder entsprechend mehr und mehr öffnet.

Zum Kühlen von Räumen sind ähnliche Systeme bekannt. Zum Kühlen wird eine Kühlflüssigkeit auf eine bestimmte Temperatur, die typischerweise niedriger ist als die Temperatur des zu kühlenden Raumes, abgekühlt und durch die Wärmetauscher geleitet. Dadurch wird der Raumluft Wärmeenergie entzogen und diese der Kühlflüssigkeit zugeführt. Das Öffnen bzw. Schliessen der Ventile erfolgt wiederum mit Thermostatköpfen, welche ein Dehnstoffelement umfassen, das sich bei einer Temperaturerhöhung ausdehnt. Dadurch wird wiederum ein Stössel in Richtung des Ventils bewegt. In diesem Fall sind die Ventile in den Zu- bzw. Abflüssen der Wärmetauscher allerdings derart ausgebildet, dass sie in Ruhestellung geschlossen sind. D. h. durch Druck des Stössels auf das Ventil wird dieses geöffnet, sodass das Ventil bei einem Anstieg der Raumtemperatur geöffnet wird und auf diese Weise mehr Kühlflüssigkeit zum Kühlen des Raumes durch den Wärmetauscher fliessen kann.

Zum Kühlen von Räumen sind weiter sogenannte Klimaanlagen bekannt. Bei solchen Systemen wird in einem Verdampfer ein komprimiertes und gekühltes, flüssiges Kältemittel verdampft, wobei die Verdampfungsenergie der Umgebung entnommen wird und die Umgebung auf diese Weise kühlt.

Alle diese Systeme haben jedoch den Nachteil, dass sie entweder nur zum Heizen oder nur zum Kühlen verwendbar sind. Soll ein Raum zu einem ersten Zeitpunkt gekühlt, zu einem anderen Zeitpunkt beheizt werden, müssen zwei verschiedene Systeme, d. h. ein Kühl- und ein Heizsystem installiert werden. Dies ist nicht nur aufwändig sondern auch teuer in der Anschaffung sowie im Unterhalt. Ebenso aufwändig und teuer wäre es, das Ventil eines Wärmetauschers, das für einen Heizbetrieb ausgelegt ist, gegen ein Ventil zu tauschen das für einen Kühlbetrieb ausgelegt ist. Zwar könnte durch einen bestehenden Wärmetauscher eines Heizsystems eine Kühlflüssigkeit zum Kühlen des Raumes geleitet werden. Allerdings würde das Thermostatventil des Wärmetauschers bei einem Temperaturanstieg geschlossen, wodurch der Durchfluss von Kühlflüssigkeit erniedrigt statt erhöht würde. Dies gilt entsprechend auch bei Kühlsystemen, bei welchen das Ventil am Wärmetauscher bei einem Temperaturanstieg geöffnet wird.

Bei einem weiteren, bekannten System umfassen die Thermostatventile elektrisch betätigbare Stellglieder, sodass sie durch geeignete, typischerweise elektrische, Steuersignale geöffnet oder geschlossen werden können. Bei solchen Systemen misst ein beliebig in einem Raum positionierbarer Fühler die Raumtemperatur und gibt diese an eine zentrale Steuerung weiter. Diese bestimmt aus der gemessenen Ist-Temperatur und der eingestellten Soll-Temperatur, ob geheizt werden soll oder nicht und sendet ein entsprechendes Steuersignal an das Ventil. Durch geeignete Programmierung der zentralen Steuerung oder der Thermostatventile ist mit diesem System zwar sowohl ein Heiz- als auch ein Kühlbetrieb möglich, aber es ist ein beträchtlicher Aufwand notwendig, um die Kommunikation zwischen dem Fühler, der zentralen Steuereinheit und dem bzw. den Ventilen zu ermöglichen. Es müssen daher nicht nur drahtgebundene, funkbasierte oder andere Kommunikationsverbindungen zwischen diesen Elementen installiert werden, die einzelnen Elemente müssen auch mit Strom versorgt werden, um ihre spezifische Funktion erfüllen zu können. Dadurch werden solche Systeme enorm aufwändig und teuer.

Weiter sind auch sogenannte thermoaktive Bauteilsysteme bekannt. Diese nutzen die Gebäudemasse als Energiespeicher. Die tagsüber in der Gebäudemasse gespeicherte Wärme wird nachts abgeführt. Damit dies funktioniert, muss jedoch die Gebäudemasse entsprechend mit Rohrleitungen ausgerüstet sein, damit die Wärme auf ein Kühlmittel übertragen und auf diese Weise abgeführt werden kann. Entsprechend aufwändig sind auch diese Systeme. Zudem ist es kaum möglich, ältere Gebäude auf ein solches System umzurüsten. Weitere Nachteile solcher Systeme bestehen darin, dass ihr Regelbereich relativ stark beschränkt ist und dass sie in ihrer Leistungsfähigkeit begrenzt sind.

### Darstellung der Erfindung

Aufgabe der Erfindung ist es, eine dem eingangs genannten technischen Gebiet zugehörende Vorrichtung zu schaffen, welche kostengünstig herzustellen und zu installieren ist und es erlaubt, ein für einen Heiz- bzw. Kühlbetrieb ausgelegtes Ventil eines Wärmetauschers derart zu steuern, dass damit ein Kühl- bzw. ein Heizbetrieb möglich wird.

Die Lösung der Aufgabe ist durch die Merkmale des Anspruchs 1 definiert. Gemäss der Erfindung sind die Kopplungsmittel derart ausgebildet, dass bei einem Temperaturrückgang des Dehnstoffelements eine Bewegung der Ventilbetätigungsmittel zum Ende der Vorrichtung mit den Befestigungsmitteln hin und dass bei einem Temperaturanstieg des Dehnstoffelements eine Bewegung der Ventilbetätigungsmittel vom Ende der Vorrichtung mit den Befestigungsmitteln weg erzeugbar ist.

Wie eingangs erläutert wird ein herkömmliches Heizkörperventil im Heizbetrieb bei einem Temperaturanstieg geschlossen, sodass weniger bzw. keine Heizflüssigkeit mehr durch den Heizkörper fliessen kann. Die Erfindung erlaubt es nun, einen solchen Heizkörper auch für einen Kühlbetrieb zu verwenden, indem nämlich Kühlmittel durch diesen Heizkörper geleitet und zum Betätigen des Ventils eine erfindungsgemässe Vorrichtung an diesem Heizkörper befestigt wird. Bei einem Temperaturanstieg dieses Raumes erfolgt eine Volumenvergrösserung des Dehnstoffelements, was eine Bewegung der Ventilbetätigungsmittel vom Ende der Vorrichtung mit den Befestigungsmitteln weg zur Folge hat. Diese Bewegung der Ventilbetätigungsmittel öffnet dementsprechend das Ventil und es kann mehr Kühlmittel durch den Heizkörper fliessen. Der Raum wird gekühlt. Umgekehrt erfolgt bei einem Temperaturabfall des Raumes eine Volumenverringerung des Dehnstoffelements und damit eine Bewegung der Ventilbetätigungsmittel zum Ende der Vorrichtung mit den Befestigungsmitteln hin. Dadurch wird das Ventil geschlossen und es fliesst weniger Kühlmittel durch den Heizkörper.

Umgekehrt ist bei einem Wärmetauscher, dessen Ventil für einen Kühlbetrieb ausgelegt ist. Hier muss das Ventil bei einem Temperaturanstieg geöffnet und bei einem Temperaturabfall geschlossen werden. Mit einer erfindungsgemässen Vorrichtung kann nun ein solcher Wärmetauscher auch für einen Heizbetrieb verwendet werden.

D. h. um einen Raum zu einem ersten Zeitpunkt zu beheizen und zu einem zweiten Zeitpunkt zu kühlen, reicht ein einziges, kostengünstig zu realisierendes Kühl- bzw. Heizsystem aus. Um vom Heiz- auf den Kühlbetrieb bzw. vom Kühl- auf den Heizbetrieb zu wechseln, muss nicht mehr wie im Stand der Technik ein teures und aufwändiges System oder gar ein zweites System installiert werden, sondern es muss lediglich die Vorrichtung zum Betätigen/Steuern des Ventils ausgetauscht werden. Solche Vorrichtungen zum Betätigen eines Heizkörperventils werden typischerweise als Thermostatköpfe bezeichnet und sind einfach und kostengünstig herzustellen. Bei einer Neuinstallation können folglich weiterhin herkömmliche Wärmetauscher verwendet werden und es müssen lediglich erfindungsgemässe Thermostatköpfe auf die Wärmetauscher aufgesetzt werden. Dadurch sind die Kosten für ein erfindungsgemässes System zum Heizen und Kühlen im Gegensatz zu den aus dem Stand der Technik bekannten Systemen viel niedriger. Da die Wärmetauscher selber unverändert beibehalten werden können, lassen sich auch bereits bestehende Heiz- bzw. Kühlsysteme durch einfaches Austauschen der Thermostatköpfe auf kostengünstige Art und Weise nachrüsten. Im Folgenden wird für eine erfindungsgemässe Vorrichtung jeweils der Begriff Thermostatkopf verwendet. Da mit einer erfindungsgemässen Vorrichtung ein Heizkörper auch zum Kühlen und ein Kühlkörper auch zum Heizen verwendet werden kann, wird nachfolgend im Zusammenhang mit der Erfindung jeweils unabhängig von der Funktion der Begriff Wärmetauscher verwendet.

Damit eine gewünschte Solltemperatur eingestellt werden kann, umfasst ein erfindungsgemässer Thermostatkopf vorzugsweise eine Einstellfeder samt Einstellmittel. Die Einstellmittel sind insbesondere als Drehgriff ausgebildet, wobei durch eine Drehung am Drehgriff die Vorspannung der Einstellfeder und damit die vom Wärmetauscher zu erreichende Solltemperatur im Raum verändert werden kann.

Das Dehnstoffelement umfasst in einer vorteilhaften Ausführungsform der Erfindung beispielsweise ein Fluid in einem Gefäss, wobei das Fluid als Dehnstoff fungiert oder das Dehnstoffelement umfasst einen Festkörper wie etwa ein Wellrohr oder ein sonstiges Expansionsgefäss, das beispielsweise von einem Fluid umgeben oder mit einem Fluid gefüllt ist, wobei in diesem Fall der Festkörper als Dehnstoff fungiert. Als Fluide können an sich beliebige flüssige oder gasförmige Stoffe wie beispielsweise Wasser verwendet werden.

Bei einer weiteren bevorzugten Ausführungsform der Erfindung umfasst die Vorrichtung ein Gehäuse und einen vom Gehäuse abgesetzten Fernfühler, wobei das Dehnstoffelement auf das Gehäuse und den Fernfühler aufgeteilt ist. Ein erster Anteil des Dehnstoffelements ist im Gehäuse und ein zweiter Anteil des Dehnstoffelements im Fernfühler integriert, wobei der Fernfühler mit dem Gehäuse durch ein Kapillarrohr verbunden ist. Da der Anteil des Dehnstoffelements im Fernfühler typischerweise grösser ist als der Anteil des Dehnstoffelements im Gehäuse selber, wirkt sich eine Temperaturänderung des Gehäuses nur marginal auf das Gesamtvolumen des Dehnstoffelements und damit auf die Regeltätigkeit des Ventils aus. Die Änderung des Gesamtvolumens des Dehnstoffelements und damit das Öffnen bzw. Schliessen des Ventils wird in diesem Fall hauptsächlich durch eine Volumenänderung des Anteils des Dehnstoffelements im Fernfühler, das heisst durch die in der Umgebung des Fernfühlers herrschende Raumtemperatur und nicht durch die in der Umgebung des Thermostatkopf-Gehäuses herrschende Raumtemperatur bestimmt.

Um die Erfindung zu implementieren, gibt es verschiedene Möglichkeiten. Eine bevorzugte Möglichkeit besteht darin, die Kopplungsmittel eines herkömmlichen Thermostatkopfs derart umzugestalten, dass die Schliessbewegung der Ventilbetätigungsmittel in eine Öffnungsbewegung und umgekehrt umgewandelt wird. D. h. der Thermostatkopf umfasst einen beweglich gelagerten Stössel, der zwischen dem Dehnstoffelement und den Befestigungsmitteln angeordnet ist. In einem herkömmlichen Thermostatkopf sind die Kopplungsmittel, welche eine volumenänderungs-bedingte Bewegung des Dehnstoffelements auf die Ventilbetätigungsmittel übertragen, für einen Heizbetrieb derart ausgebildet, dass bei einem Temperaturanstieg eine Bewegung des Stössels in Richtung der Befestigungsmittel, d. h. in Richtung des Ventils direkt in eine Bewegung der Ventilbetätigungsmittel in Richtung der Befestigungsmittel und damit in Richtung des Ventils übertragbar ist und das Ventil bei einer Ausdehnung des Dehnstoffelements folglich geschlossen wird. Entsprechend wird eine Bewegung des Stössels von den Befestigungsmitteln und damit dem Ventil weg in eine Bewegung der Ventilbetätigungsmittel vom Ventil weg übertragen. Bei der Erfindung sind die Kopplungsmittel hingegen derart ausgebildet, dass sie für einen Kühlbetrieb verwendbar sind. Bei einem Temperaturanstieg des Dehnstoffelements wird die Bewegung des Stössels zu den Befestigungsmitteln hin durch die Kopplungsmittel in eine Bewegung der Betätigungsmittel von den Befestigungsmitteln weg umgewandelt. Entsprechend wird bei einem Temperaturabfall des Dehnstoffelements eine Bewegung des Stössels von den Befestigungsmitteln weg in eine Bewegung der Betätigungsmittel zu den Befestigungsmitteln hin umgewandelt.

Durch diese Bewegungsumkehrung bzw. -umlenkung kann die aus der Ausdehnung des Dehnstoffelements resultierende Bewegung, die in einem herkömmlichen Thermostatkopf zum Schliessen des Ventils verwendet wird, bei der Erfindung auf einfache Art und Weise zum Öffnen des Ventils verwendet werden. Umgekehrt kann bei der Erfindung die aus einer Volumenverringerung des Dehnstoffelements resultierende Bewegung zum Schliessen des Ventils verwendet werden.

Soll also ein Raum z. B. im Winter beheizt werden, wird durch einen herkömmlichen Wärmetauscher mit einem herkömmlichen Ventil ein Heizmittel geleitet und auf das Ventil wird ein herkömmlicher Thermostatkopf aufgesetzt. Soll nun derselbe Raum mit demselben Wärmetauscher und demselben Ventil im Sommer beispielsweise gekühlt werden, wird einfach ein Kühlmittel durch den Wärmetauscher geleitet und ein Thermostatkopf gemäss der Erfindung auf das Ventil aufgesetzt. Es ist natürlich auch möglich, einen herkömmlichen und einen erfindungsgemässen Thermostatkopf mit jeweils einem eigenen Ventilanschluss in einem einzigen Gehäuse unter zu bringen, sodass nicht ein Thermostatkopf gegen einen anderen Thermostatkopf ausgetauscht werden muss, sondern dass zwischen Heiz- und Kühlbetrieb gewechselt werden kann, indem der Thermostatkopf einfach mit dem jeweils anderen Anschluss auf das Ventil aufgesetzt wird.

Bei einer vorteilhaften Ausführungsform der Erfindung kann diese sowohl für einen Kühlals auch für einen Heizbetrieb verwendet werden, ohne dass sie von einem auf einen anderen Anschluss umgesteckt werden muss. Hierfür sind die Kopplungsmittel derart ausgebildet, dass sie für den Kühlbetrieb wie vorgängig beschrieben ausgebildet sind. Weiter sind die Kopplungsmittel für einen Heizbetrieb derart ausgebildet, dass eine Bewegung des Stössels zu den Befestigungsmitteln hin ebenfalls in eine Bewegung der Betätigungsmittel zu den Befestigungsmitteln hin sowie eine Bewegung des Stössels von den Befestigungsmitteln weg ebenfalls in eine Bewegung der Betätigungsmittel von den Befestigungsmitteln weg umwandelbar ist. Um wahlweise zwischen dem Heiz- und dem Kühlbetrieb wechseln zu können, weist die Erfindung in dieser Ausführungsform mit Vorteil Umschaltmittel auf zur Umschaltung der Kopplungsmittel zwischen Heizbetrieb und Kühlbetrieb.

D. h. die Umkehrung bzw. Umlenkung der Bewegung des Stössels wie vorgängig beschrieben ist wahlweise aktivier- bzw. deaktivierbar.

Diese Umschaltung zwischen Heiz- und Kühlbetrieb kann natürlich manuell erfolgen. In einer vorteilhaften Ausführungsform der Erfindung sind die Umschaltmittel allerdings für eine automatische Umschaltung zwischen Heizbetrieb und Kühlbetrieb ausgebildet. So könnte beispielsweise eine Zeitschaltuhr verwendet werden, um den Zeitpunkt der Umschaltung festzulegen. Die automatische Umschaltung könnte beispielsweise aber auch in Abhängigkeit der Lichtverhältnisse (kurze Tage/lange Nächte im Winter; lange Tage/kurze Nächte im Sommer) oder der Temperaturverhältnisse (Durchschnittstemperaturen im Sommer höher als im Winter) erfolgen. Denkbar wäre auch eine Steuerung der Umschaltmittel durch ein Datenverarbeitungssystem wie beispielsweise einem Haussteuerungssystem. Die eigentliche Umschaltung der Kopplungsmittel könnte mit einem Umschaltmechanismus erfolgen, der die Energie zum Umschalten beispielsweise aus einer Batterie oder einer anderen beliebigen anderen Energiequelle wie etwa einer Solarzelle erhält.

Es wäre zwar möglich, die Kopplungsmittel derart auszubilden, dass die Bewegungsumlenkung durch elektrische Mittel, wie beispielsweise elektrische Sensoren und Aktoren realisiert ist. Hierfür müsste der Thermostatkopf jedoch eine elektrische Energiequelle beinhalten. Dies soll z. B. aus kostentechnischen oder auch ökologischen Gründen nach Möglichkeit jedoch vermieden werden. Vorzugsweise umfassen die Kopplungsmittel daher mechanische oder hydraulische Mittel zur Bewegungsumlenkung, beispielsweise ein Getriebe, wobei es sich insbesondere um ein hydraulisches oder ein mechanisches Getriebe handelt.

Bei einem mechanischen Getriebe weisen die Kopplungsmittel für die Umlenkung der Bewegung des Stössels in die Bewegung der Ventilbetätigungsmittel insbesondere einen Hebelmechanismus und/oder einen Zahnstangen/Zahnrad-Mechanismus auf.

Eine weitere bevorzugte Möglichkeit zur Implementierung der Erfindung besteht darin, die bei einem Temperaturanstieg resultierende Volumenvergrösserung des Dehnstoffelements direkt in eine Öffnungsbewegung der Ventilbetätigungsmittel umzuwandeln, anstatt diese wie vorgängig beschrieben durch eine Umlenkung der Stösselbewegung zu erreichen. Entsprechend wird die bei einem Temperaturabfall resultierende Volumenverringerung des Dehnstoffelelements direkt in eine Schliessbewegung der Ventilbetätigungsmittel umgewandelt.

Bei dieser Ausführungsform befindet sich das Dehnstoffelement in einem Behälter aus einem Material mit einem höheren Wärmeausdehnungskoeffizienten als das Dehnstoffelement. Steigt die Raumtemperatur an, dehnt sich sowohl der Behälter als auch das Dehnstoffelement aus. Da der Wärmeausdehnungskoeffizient des Behälters höher ist als jener des Dehnstoffelements, steigt das Innenvolumen des Behälters stärker an als das Volumen des sich darin befindenden Dehnstoffelements. Dadurch entsteht innerhalb des Behälters quasi ein Unterdruck. Indem ein kleiner Bereich der Behälterwandung elastisch ausgebildet wird, wird dieser Unterdruck durch eine Verformung dieses elastischen Bereichs in Richtung des Behälterinneren ausgeglichen. Entsprechend wird dieser elastische Bereich der Behälterwandung bei einem Temperaturabfall nach aussen verformt, da das Innenvolumen des Behälters stärker sinkt als das Volumen des Dehnstoffelements. Diese Verformungsbewegung des elastischen Bereichs kann direkt zur Erzeugung der Schliessbewegung (Temperaturabfall) bzw. der Öffnungsbewegung (Temperaturanstieg) der Ventilbetätigungsmittel verwendet werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung eines auf einem Heizkörperventil aufgesetzten Thermostatkopfs gemäss dem Stand der Technik;
- Fig. 2: eine schematische Darstellung eines Thermostatkopfs gemäss der Erfindung mit hydraulischer Kraftumlenkung;
- Fig. 3: schematische Darstellungen einiger verschiedener mechanischer Kraftumlenkungen;
- Fig. 4: eine schematische Darstellung eines anderen Beispiels eines erfindungsgemässen Thermostatkopfs bei einer niedrigen (Fig. 4a)) und einer hohen Umgebungstemperatur (Fig. 4b));
- Fig. 5: eine schematische Darstellung eines weiteren Beispiels eines erfindungsgemässen Thermostatkopfs bei einer niedrigen (Fig. 5a)) und einer höheren Umgebungstemperatur (Fig. 5b));
- Fig. 6: eine schematische Darstellung eines weiteren Beispiels eines erfindungsgemässen Thermostatkopfs in einer perspektivischen Schnittansicht (Fig. 6a)) und im Querschnitt (Fig. 6b));
- Fig. 7: eine schematische Darstellung des erfindungsgemässen Thermostatkopfs aus Fig. 4, der hier auf einem zur Kühlung ausgelegten Ventil eines Wärmetauschers aufgesetzt ist.

Grundsätzlich sind in den Figuren gleiche Teile mit gleichen Bezugszeichen versehen.

### Wege zur Ausführung der Erfindung

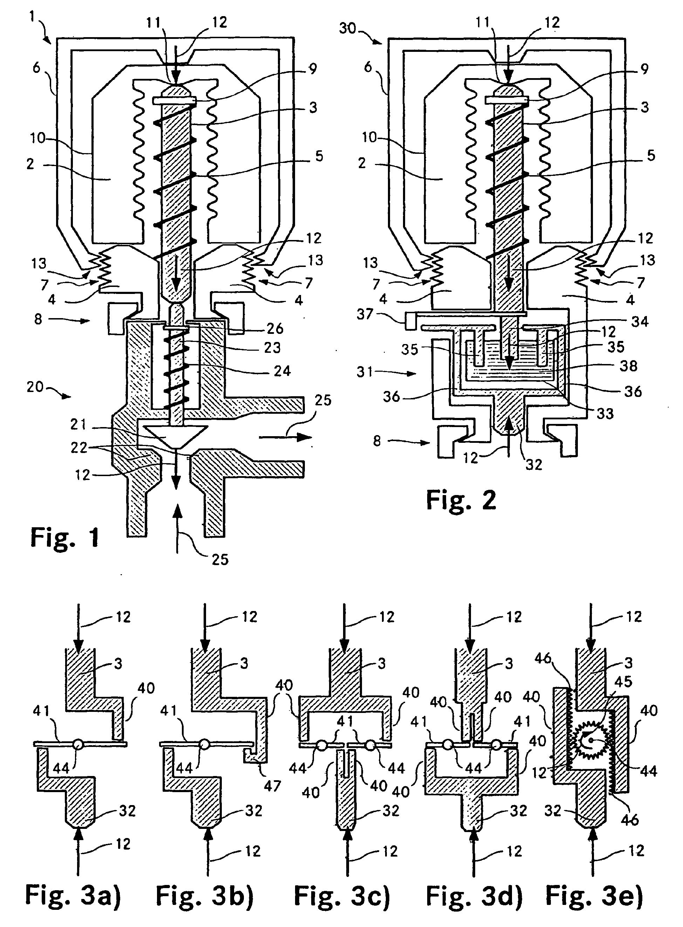

In Figur 1 ist ein herkömmlicher Thermostatkopf 1 dargestellt, der auf das Ventil 20 eines Heizkörpers (nicht dargestellt) aufgesetzt ist. Dass es sich um ein Ventil 20 für einen Heizkörper handelt, geht daraus hervor, dass sich der Ventilteller 21 bei einem Druck auf den Ventilstift 23 durch den Stössel 3 des Thermostatkopfs 1 in Richtung des Ventilsitzes 22 bewegt und auf diese Weise das Ventil 20 schliesst, so dass der Durchfluss des Heizmittels (nicht dargestellt) durch das Ventil 20 in Fliessrichtung 25 und damit die Temperatur des Heizkörpers verringert wird. Wird der Druck auf den Ventilstift 23 geringer, wird dieser durch die Ventilfeder 24, welche einerseits am Ventilgehäuse und andererseits an einem mit dem Ventilstift 23 verbundenen Anschlag 26 abgestützt ist, nach oben bewegt, sodass der Ventilsitz 22 freigegeben und das Ventil 20 mehr und mehr geöffnet wird.

Der Thermostatkopf 1 umfasst ein festes Gehäuse 4, Befestigungsmittel 8 zum Befestigen des Thermostatkopfs 1 am Ventil 20 sowie einen Dehnstoff 2, welcher sich in einem geschlossenen Gefäss 10 befindet. Bei dem Dehnstoff 2 handelt es sich typischerweise um eine Flüssigkeit oder ein gasförmiges Material. Bei einem Temperaturanstieg dehnt sich der Dehnstoff 2 aus, wodurch sich im Gefäss 10 ein Überdruck ausbildet, der von der Ausbuchtung 11 auf den Stössel 3 des Thermostatkopfs 1 übertragen wird. Der Stössel 3 bewegt sich entsprechend nach unten, d. h. in Richtung des Ventils 20 bzw. der Befestigungsmittel 8 und überträgt diese Bewegung entsprechend auf den Ventilstift 23 des Ventils 20, wodurch dieses mehr und mehr geschlossen wird. Die Bewegung des Stössels 3, des Ventilstifts 23 und des Ventiltellers 21, welche sich durch den Temperaturanstieg des Dehnstoffs 2 ergibt, ist durch die Pfeile 12 angedeutet.

Bei einem Temperaturabfall zieht sich der Dehnstoff 2 zusammen, wodurch sich die Ausbuchtung 11 wieder nach oben, d. h. von den Befestigungsmitteln 8 weg, bewegt und auf diese Weise den Stössel 3 freigibt. Durch die Federkraft der Einstellfeder 5, welche einerseits am Gehäuse 4 und andererseits an dem mit dem Stössel 3 verbundenen Anschlag 9 abgestützt ist, bewegt sich der Stössel 3 nach oben und gibt so den Ventilstift 23 frei, sodass sich das Ventil 20 wie zuvor beschrieben öffnet.

Zum Einstellen der gewünschten Solltemperatur verfügt der Thermostatkopf 1 über einen Drehgriff 6, welcher über ein Innengewinde 13 verfügt, das in ein Aussengewinde 7 des Gehäuses 4 eingreift. Wird der Drehgriff 6 beispielsweise im Uhrzeigersinn gedreht, bewegt sich dieser samt dem Gefäss 10 und dem Stössel 3 in Richtung des Ventils 20 und erhöht auf diese Weise die Vorspannung der Einstellfeder 5. Dadurch wird das Ventil 20 ein Stück weiter geschlossen, wodurch bei gleichbleibender Umgebungstemperatur weniger Heizmittel durch das Ventil 20 fliesst. Die Solltemperatur wird dadurch folglich erniedrigt. Entsprechend kann durch Drehen des Drehgriffs 6 gegen den Uhrzeigersinn die Vorspannung der Einstellfeder 5 verringert und die Solltemperatur erhöht werden.

Der Thermostatkopf 1 ist nicht für einen Kühlbetrieb geeignet, denn auch wenn ein Kühlmittel durch das Ventil 20 geleitet würde, würde das Ventil 20 bei einem Temperaturanstieg ebenfalls geschlossen, sodass nicht wie für eine verstärkte Kühlung notwendig mehr Kühlmittel durch den Wärmetauscher fliesst, sondern weniger. Umgekehrt wird das Ventil 20 bei einem Temperaturrückgang geöffnet, sodass statt weniger Kühlmittel mehr Kühlmittel durch den Wärmetauscher fliesst.

Fig. 2 zeigt einen erfindungsgemässen Thermostatkopf 30, der sowohl für einen Heiz- als auch einen Kühlbetrieb verwendet werden kann. Die Funktionsweise des Dehnstoffs 2, des Gefässes 10, des Stössels 3, der Einstellfeder 5 sowie des Drehgriffs 6 sind im Wesentlichen identisch mit der Funktionsweise beim Thermostatkopf 1 aus Figur 1. Ebenso wird der Thermostatkopf 30 mittels einer Befestigungsvorrichtung 8 auf dem Ventil 20 eines Wärmetauschers befestigt. Zum Befestigen gibt es verschiedene bekannte Möglichkeiten wie Schraub- oder Steckverbindungen, wobei es unerheblich ist, welche dieser Möglichkeiten gewählt wird. Dies gilt im Übrigen auch für alle nachfolgenden Beispiele.

Für den Kühlbetrieb wird im Unterschied zum Thermostatkopf 1 aus Fig. 1 die Bewegung des Stössels 3 jedoch nicht direkt auf den Ventilstift 23 übertragen, sondern der Thermostatkopf 30 umfasst ein hydraulisches Getriebe 31 zur Umwandlung einer Ab- bzw. Aufwärtsbewegung des Stössels 3 in eine Gegenbewegung des Stössels 32. D. h. bei einem Temperaturanstieg wandelt dieses Getriebe 31 die Bewegung des Stössels 3 in Richtung der Befestigungsmittel, d. h. in Richtung des Ventils 20, um in eine Bewegung des Stössels 32 weg von den Befestigungsmitteln und damit weg vom Ventil 20. Entsprechend wird das Ventil 20 bei einem Temperaturanstieg geöffnet statt wie beim Stand der Technik geschlossen. Umgekehrt wird das Ventil 20 geschlossen, wenn die Raumtemperatur sinkt.

Die Bewegungsumlenkung erfolgt wie folgt beschrieben. Das hydraulische Getriebe 31 umfasst einen mit einer Flüssigkeit 38 gefüllten Behälter 33, welcher derart angeordnet ist, dass der Stössel 3 bzw. ein am Stössel 3 angebrachter Tauchkolben 34 über eine Dichtung in die Flüssigkeit 38 im Behälter 33 eingetaucht ist. Bei einem Temperaturanstieg taucht der Tauchkolben 34 folglich tiefer in den Behälter 33 ein, wodurch die Vorsprünge 35 über entsprechende Dichtungen aus dem Behälter 33 herausgedrückt werden. Da sich die Vorsprünge 35 ebenfalls an der Oberseite des Behälters 33, d. h. auf derselben Seite wie der Tauchkolben 34 befinden, wird die Abwärtsbewegung des Tauchkolbens 34 in eine Aufwärtsbewegung der Vorsprünge 35 umgekehrt bzw. umgewandelt. Mit den Vorsprüngen 35 ist ein Rahmen 36 fest verbunden, an dessen Unterseite wiederum der zweite Stössel 32 befestigt ist. D. h. die Bewegung des Stössels 3 in Richtung des Ventils 20 wird durch das hydraulische Getriebe 31 in eine Bewegung des Stössels 32 vom Ventil 20 weg umgewandelt. Das Ventil 20 wird mehr geöffnet. Die Bewegung des Stössels 3, des Tauchkolbens 34, der Vorsprünge 35 und des Stössels 32, welche sich durch den Temperaturanstieg des Dehnstoffs 2 ergibt, ist durch die Pfeile 12 angedeutet.

Bei einem Temperaturrückgang bewegt sich der Stössel 3 weg vom Ventil 20 und damit der Tauchkolben 34 aus dem Behälter 33 hinaus. Durch den im Behälter 33 entstehenden Unterdruck werden die Vorsprünge 35 tiefer in den Behälter 33 hineingezogen, wodurch sich eine Bewegung der Vorsprünge 35 und damit auch des Rahmens 36 samt Stössel 32 in Richtung des Ventils 20 ergibt. Das Ventil 20 wird mehr geschlossen.

Im Kühlbetrieb ist der Behälter 33 demzufolge starr mit dem Gehäuse 4 des Thermostatkopfs 30 verbunden, wodurch die beschriebene Bewegungsumkehr möglich wird. Für den Heizbetrieb umfasst der Thermostatkopf 30 zusätzliche Umschaltmittel, in Figur 2 als Drehknopf 37 dargestellt. Durch Betätigung der Umschaltmittel, beispielsweise durch Drehen des Drehknopfs 37, wird die Kopplung zwischen dem Gehäuse 4 und dem Behälter 33 aufgehoben und der Behälter 33 wird bewegungsmässig an den Stössel 3 gekoppelt. Dadurch sind der Stössel 3, der Behälter 33 und der Rahmen 36 samt Stössel 32 gegenseitig arretiert. Bei einem Temperaturanstieg bewegt sich folglich der Stössel 3, der Behälter 33 und der Rahmen 36 samt Stössel 32 in Richtung der Befestigungsmittel 8 und damit in Richtung des Ventils 20, auf welchem der Thermostatkopf 30 aufgesetzt ist (nicht dargestellt). D. h. im Heizbetrieb wird das Ventil 20 bei einem Temperaturanstieg geschlossen und entsprechend bei einem Temperaturrückgang geöffnet, was der normalen Funktion eines herkömmlichen Thermostatkopfs entspricht.

In Figur 3 sind eine Reihe verschiedener, mechanischer Getriebe dargestellt, welche anstelle des hydraulischen Getriebes 31 aus Fig. 2 zur Umlenkung der Bewegung des Stössels 3 in eine entgegengesetzte Bewegung des Stössels 32 verwendet werden können. Die Pfeile 12 deuten wiederum die Bewegung der Stössel 3 und 32 sowie weiterer Bauteile bei einem Temperaturanstieg des Dehnstoffelements an.

Fig. 3a) zeigt eine Bewegungsumlenkung, bei welcher eine Abwärtsbewegung des Stössels 3 mit Hilfe eines am Stössel 3 angeformten Arms 40 auf einen Hebel 41 übertragen wird, wobei der Hebel 41 um eine Achse 44 drehbar gelagert ist. Das andere Ende des Hebels 41 bewegt sich folglich nach oben, wodurch sich der am Stössel 32 angeformte Arm 40 und damit der Stössel 32 selber ebenfalls nach oben bewegt. Hierfür ist der Arm 40 des Stössels 32 entweder mit dem Hebel 41 (vorzugsweise beweglich) verbunden oder der Stössel 32 wird durch eine Federkraft einer (nicht dargestellten) Feder, beispielsweise der Ventilfeder 24 des Ventils, nach oben gedrückt. Damit der Hebel 41 auch einer Aufwärtsbewegung des Stössels 3 folgt, ist dieser (vorzugsweise beweglich) mit dem Hebel 41 verbunden oder es ist eine weitere (nicht dargestellte) Feder vorgesehen, welche den Hebel 41 dem Stössel 3 folgen lässt. Eine weitere Möglichkeit, den Hebel 41 einer Aufwärtsbewegung des Stössels 3 folgen zu lassen, besteht darin, den Arm 40 des Stössels 3 wie in Fig. 3b) dargestellt hakenförmig 47 auszubilden. Bei dieser Variante folgt der Stössel 32 samt dem Hebel 41 einer Abwärtsbewegung des Stössels 3 ebenfalls aufgrund der durch die Ventilfeder 24 ausgeübten Federkraft.

Bei dem in Fig. 3c) dargestellten mechanischen Getriebe sind für eine symmetrische Krafteinwirkung zwei jeweils drehbar um eine Achse 44 gelagerte Hebel 41 vorgesehen und am unteren Teil des Stössels 3 sind entsprechend zwei Arme 40 angeformt. Sodass eine Abwärtsbewegung des Stössels 3 symmetrisch in eine Aufwärtsbewegung des Stössels 32 umgewandelt wird. Fig. 3d) zeigt eine ähnliche Anordnung, bei welcher die Bewegung symmetrisch umgelenkt wird, bei welcher jedoch der Stössel 3 mittig auf die beiden Hebel 41 drückt und der Stössel 32 zwei Arme 40 umfasst.

Damit die Hebel 41 bzw. die Stössel 32 den Bewegungen des Stössels 3 in beiden Richtungen folgt, können die Arme 40 bei allen Beispielen 3a), 3b), 3c) oder 3d) mit den Hebeln 41 entweder verbunden sein oder es sind wie bereits erwähnt, Federn dafür vorgesehen.

Fig. 3e) zeigt eine weitere Möglichkeit zur Bewegungsumlenkung mittels eines Zahnrads 45 und zwei Zahnstangen 46. Der Stössel 3 weist wiederum einen Arm 40 auf, der in diesem Fall jedoch auf der Innenseite eine Zahnstange 46 aufweist. Diese greift in die Zähne eines um eine Achse 44 drehbaren Zahnrads 45 ein und dreht dieses bei einer Abwärtsbewegung des Stössels 3 im Uhrzeigersinn (gemäss Pfeil 12). Dadurch wird die an einem Arm 40 des Stössels 32 angeformte/befestigte Zahnstange 46 und damit auch der Stössel 32 selber nach oben bewegt.

Die Führung der Stössel 3 bzw. 32 erfolgt bei allen Beispielen in Fig. 3 beispielsweise durch das (nicht dargestellte) Gehäuse des Thermostatkopfs 30. Zudem können alle Beispiele derart ausgeführt sein, dass sie sowohl für Kühl- als auch für Heizbetrieb verwendet werden können. D. h. sie sind zwischen Heiz- und Kühlbetrieb umschaltbar. Für den Kühlbetrieb sind die Achsen 44 jeweils in Bezug auf das Gehäuse 4 des Thermostatkopfs fixiert und die Hebel 41 sind jeweils um die Achsen 44 drehbar. Für den Heizbetrieb sind die Vorrichtungen jeweils derart umschaltbar ausgebildet, dass die Fixierung der Achsen 44 in Bezug auf das Gehäuse 4 aufgehoben werden kann, sodass die Achsen 44 samt Hebel 41 bzw. Zahnrad 45 gegenüber dem Gehäuse 4 veschiebbar sind. Gleichzeitig werden der Stössel 3, der bzw. die Hebel 41 respektive das Zahnrad 45 sowie der Stössel 32 gegenseitig arretiert, sodass eine Bewegung des Stössels 3 direkt in eine gleichgerichtete Bewegung des Stössels 32 übertragen wird. Diese Umschaltmittel sowie die Bewegungspfeile für Heizbetrieb sind in den Figuren 3a) - 3e) nicht dargestellt.

Für den Fachmann ist des Weiteren klar, dass, obwohl nur einige wenige Beispiele für Bewegungsumlenkungen dargestellt sind, eine Vielzahl von Abwandlungen der gezeigten Beispiele sowie viele weitere Beispiele für eine Bewegungsumlenkung möglich sind.

Es ist darüber hinaus festzuhalten, dass sämtliche beschriebenen Beispiele von Umlenkvorrichtungen nicht nur mit dem in Fig. 2 dargestellten Thermostatkopf 30, sondern auch in Kombination mit anderen Thermostatköpfen verwendet werden können, deren innerer Aufbau sich von demjenigen aus Fig. 2 unterscheidet.

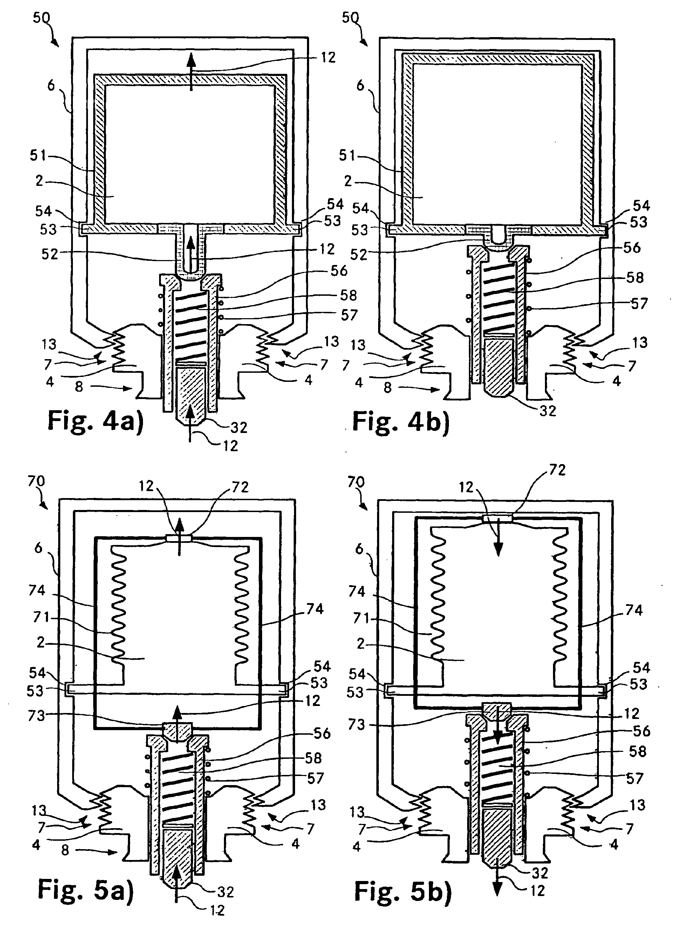

Ein weiterer erfindungsgemässer Thermostatkopf 50 ist in Fig. 4 dargestellt. Der (flüssige bzw. gasförmige) Dehnstoff 2 befindet sich wiederum in einem geschlossenen Gefäss 51, wobei in die Gefässwandung ein nach aussen gerichteter Zapfen 52 aus einem elastischen Material wie z. B. NBR (Nitril-Butadien-Kautschuk) oder ein anderes Elastomer integriert ist. Die restliche Wand des Gefässes 51 besteht in diesem Fall jedoch aus einem Material wie beispielsweise PVC (Polyvinylchlorid), welches eine grössere Wärmeausdehnung aufweist als der Dehnstoff 2, wobei selbstverständlich auch andere Stoffe mit einem höheren Wärmeausdehnungskoeffizienten als der Dehnstoff 2 verwendbar sind.

Bei einem Temperaturanstieg steigt das Innenvolumen des Gefässes 51 folglich mehr als sich das Volumen des Dehnstoffs 2 vergrössert. Da der Zapfen 52 aus elastischem Material besteht, wird der Unterdruck im Gefäss 51 durch eine Verkürzung des Zapfens 52 ausgeglichen. Dieser Hochtemperatur-Zustand ist in Fig. 4b) dargestellt.

Das Gefäss 51 ist nun derart im Thermostatkopf 50 befestigt, dass es beispielsweise mit einer im unteren Bereich des Gefässes 51 angeformten Lippe 53 in entsprechende Aussparungen 54 auf der Innenseite des Drehgriffs 6 eingreift. Dadurch kann sich das Gefäss 51 bei einem Temperaturanstieg nach oben, d. h. in Richtung des Pfeils 12 (Fig. 4a)) ausdehnen, wobei wie vorgängig beschrieben durch die Verformung des Zapfens 52 trotz einer Volumenvergrösserung des Dehnstoffs 2 eine nach oben, d. h. vom Ventil 20 weg gerichtete Bewegung der Zapfenspitze erreicht wird. Diese Bewegung der Zapfenspitze wird auf eine beweglich im Gehäuse 4 geführte Hülse 56 übertragen, welche durch eine am Gehäuse 4 abgestützte Feder 57 nach oben gedrückt wird. In der Hülse 56 befindet sich der Stössel 32, welcher den Ventilstift 24 des Ventils 20 betätigt und der durch eine weitere Feder 58, welche sich im Innern der Hülse 56 befindet, in Kontakt mit dem Ventilstift gehalten wird. Bei einer Temperaturerhöhung wird der Stössel 32 infolge der Verkürzung des Zapfens 52 nach oben bewegt, wodurch das Ventil geöffnet wird. Die Bewegungen der Oberseite des Gefässes 51, der Spitze des Zapfens 52 und des Stössels 32 bei einer Temperaturerhöhung sind durch die Pfeile 12 angedeutet. Die Funktion der Feder 57 entspricht hierbei der Einstellfeder 5 aus Fig. 2. Durch Drehen des Drehgriffs 6 kann die mit dem Thermostatkopf 50 zu erreichende Solltemperatur eingestellt werden.

Umgekehrt sinkt bei einem Temperaturabfall das Innenvolumen des Gefässes 51 hingegen mehr als das Volumen des Dehnstoffs 2, wobei der dabei entstehende Überdruck durch eine Verlängerung des elastischen Zapfens 52 ausgeglichen wird. Dieser Niedrigtemperatur-Zustand ist in Fig. 4a) dargestellt. Entsprechend wird der Stössel 32 in der Hülse 56 nach unten bewegt und schliesst auf diese Weise das Ventil 20.

Aus Figur 4 ist ersichtlich, dass durch die dargestellte Ausbildung des Gefässes 51 mit dem Dehnstoff 2 und dessen Befestigung im Drehgriff 6 bei einer Temperaturerhöhung direkt eine nach oben gerichtete Ausdehnungsbewegung des Dehnstoffs 2 resultiert, sodass diese direkt in die gleichgerichtete Öffnungsbewegung des Stössels 32 umgesetzt werden kann. In diesem Fall ist folglich kein Getriebe für eine Bewegungsumlenkung notwendig.

In Fig. 5 ist ein weiteres Beispiel für einen erfindungsgemässen Thermostatkopf 70 dargestellt. Dieser umfasst ein Wellrohr 71, welches mit seiner Unterseite mittels einer an das Wellrohr 71 angeformten Lippe 53 in entsprechenden Aussparungen 54 auf der Innenseite des Drehgriffs 6 fixiert ist. Bei einem Temperaturanstieg dehnt sich das Wellrohr 71 aus. Da das Wellrohr 71 mit seiner Unterseite im Drehgriff 6 fixiert ist, ergibt sich durch die Ausdehnung eine Bewegung der Oberseite des Wellrohrs 71 nach oben in Richtung des Pfeils 12. An der Oberseite befindet sich eine Befestigung 72, via welche ein oder mehrere Bügel 74 mit dem Wellrohr 71 verbunden sind. Die Bügel 74 führen zur Unterseite des Wellrohrs 71 und halten einen Stössel 73. Infolge der Aufwärtsbewegung der Oberseite des Wellrohrs 71 samt der Befestigung 72 wird auch der Stössel 73 nach oben in Richtung des Pfeils 12 bewegt. Die Funktionalität der Hülse 56, der Federn 57 und 58 sowie des Stössels 32 ist im vorliegenden Beispiel gemäss Fig. 5 identisch mit deren Funktionalität im Beispiel gemäss Fig. 4. Der Stössel 73 ersetzt quasi den Zapfen 52 aus Fig. 4.

D. h. auch bei diesem Beispiel wird ein für den Heizbetrieb ausgelegtes Ventil, auf welches der Thermostatkopf 70 aufgesetzt ist, bei einem Temperaturanstieg geöffnet und entsprechend bei einem Temperaturrückgang geschlossen. Der Thermostatkopf 70 kann folglich für einen Kühlbetrieb verwendet werden.

So wie die Thermostatköpfe 50 bzw. 70 dargestellt sind, sind sie lediglich für einen Kühlbetrieb zu verwenden. Damit diese Thermostatköpfe auch für einen Heizbetrieb verwendbar wären, könnte darin eine Umlenkvorrichtung der vorgängig beschriebenen Art sowie entsprechende Umschaltmittel zum Umschalten zwischen Kühl- und Heizbetrieb integriert werden.

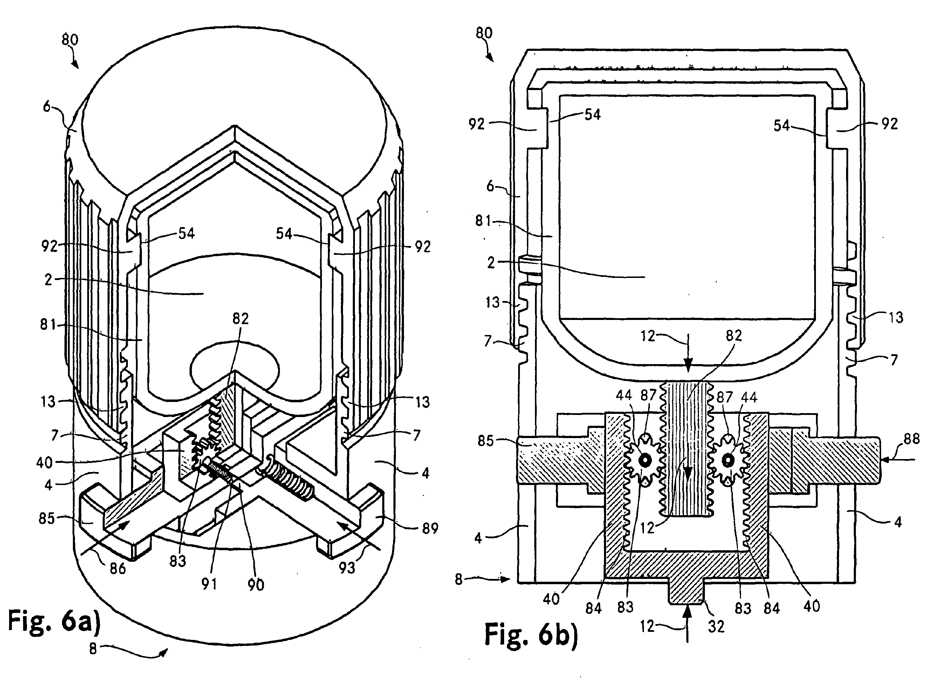

Fig. 6 zeigt eine weitere Variante eines erfindungsgemässen Thermostatkopfs 80. Auch in diesem Beispiel ist ein Expansionsgefäss 81 im Drehgriff 6 fixiert. Hier weist jedoch das Expansionsgefäss 81 in seinem oberen Bereich Aussparungen 54 auf, in welche entsprechende Vorsprünge 92 auf der Innenseite des Drehgriffs 6 eingreifen. Bei einem Temperaturanstieg dehnt sich das Expansionsgefäss 81 aus. Da das Expansionsgefäss 81 mit seiner Oberseite im Drehgriff 6 fixiert ist, ergibt sich durch die Ausdehnung eine Bewegung der Unterseite des Expansionsgefässes 81 nach unten in Richtung des Pfeils 12. Eine Zahnstange 82, welche auf zwei Seiten mit einer Verzahnung 84 versehen ist, ist mit dem Expansionsgefäss 81 verbunden und erfährt durch die Ausdehnung des Expansionsgefässes 81 eine Bewegung nach unten in Richtung des Pfeils 12. Über zwei Zahnräder 83 (jeweils eines auf jeder Seite der Zahnstange 82) wird diese Abwärtsbewegung der Zahnstange 82 in eine Aufwärtsbewegung des Stössels 32 umgewandelt, welcher hierfür zwei Arme 40 mit jeweils einer Verzahnung 84 aufweist, welche mit jeweils einem der beiden Zahnräder 83 zusammenwirkt. Der Stössel 32 bewegt sich bei einem Temperaturanstieg folglich nach oben, wodurch das Ventil geöffnet wird und bei einem Temperaturrückgang nach unten, wodurch das Ventil geschlossen wird.

Der Thermostatkopf 80 umfasst weiter einen Schiebeschalter 85 zum Umschalten zwischen Heiz- und Kühlbetrieb. In Fig. 6a) steht der Schalter auf Kühlbetrieb: In dieser Stellung sind die Achsen 44 der Zahnräder 45 durch den Schiebeschalter 85 fixiert und sind daher in Bezug auf das Gehäuse 4 des Thermostatkopfs 80 nicht verschiebbar. Wie vorgängig beschrieben wird dadurch eine Bewegung der Zahnstange 82 infolge einer Volumenänderung des Expansionsgefässes 81 in eine gegenläufige Bewegung des Stössels 32 umgelenkt.

Zum Umschalten auf Heizbetrieb, der in Fig. 6b) dargestellt ist, wird der Schiebeschalter 85 in Richtung des Pfeils 86 gedrückt. Dadurch werden die Zahnstange 82, die Zahnräder 45 und der Stössel 32 samt den Armen 40 gegenseitig arretiert und die Fixierung der Zahnräder 45 durch den Schiebeschalter 85 wird aufgehoben. Der Schiebeschalter 85 weist zwei vertikale Nuten 87 auf, in welchen sich die Achsen 44 der Zahnräder 44 in vertikaler Richtung relativ zum Gehäuse 4 des Thermostatkopfs 80 bewegen können. Im Heizbetrieb wird somit bei einem Temperaturanstieg eine Abwärtsbewegung der Zahnstange 82 infolge der gegenseitigen Arretierung von Zahnstange 82, Zahnräder 45 und Stössel 32 ebenfalls in eine Abwärtsbewegung des Stössels 32 übertragen. D. h. das Ventil wird geschlossen. Umgekehrt wird das Ventil bei einem Temperaturrückgang geöffnet. Um auf den Kühlbetrieb zurückzuschalten wird der Schiebeschalter 85 einfach in Richtung des Pfeils 88 gedrückt.

In Fig. 6a) ist zudem ein Entriegelungsschalter 89 dargestellt. Wird der Entriegelungsschalter 89 in Richtung des Pfeils 93 gedrückt, verriegelt er den Schiebeschalter 85 mittels eines Vorsprungs 90, der in eine entsprechende Öffnung 91 am Schiebeschalter 85 eingreift und verhindert so ein Umschalten des Schiebeschalters 85 in den Heizbetrieb. Zum Umschalten auf Heizbetrieb muss zunächst der Entriegelungsschalter 89 in Gegenrichtung des Pfeils 93 geöffnet werden, sodass der Vorsprung 90 die Öffnung 91 freigibt und dann kann der Schiebeschalter 85 in Richtung des Pfeils 86 gedrückt werden.

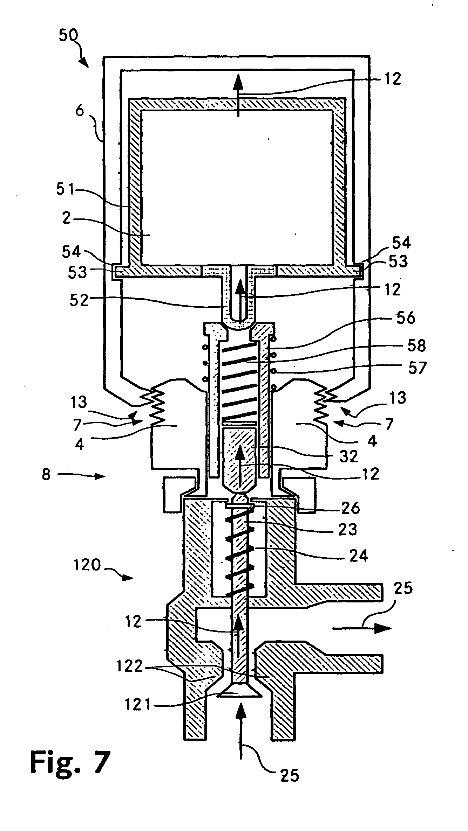

In Fig. 7 ist nochmals der erfindungsgemässe Thermostatkopf 50 aus Fig. 4 dargestellt. Dessen Funktion in Kombination mit einem für den Heizbetrieb ausgelegten Wärmetauscher-Ventil 20 wurde dort bereits erläutert. Im Gegensatz zu Fig. 4 ist in Fig. 7 der Thermostatkopf 50 in Kombination mit einem für den Kühlbetrieb ausgelegten WärmetauscherVentil 120 dargestellt. D. h. das Ventil 120 wird bei einem Druck auf den Ventilstift 23 nicht geöffnet, sondern geschlossen, da sich der Ventilteller 121 unterhalb des Ventilsitzes 122 befindet. Mit einem erfindungsgemässen Thermostatkopf ist es nun möglich, einen Wärmetauscher mit einem für den Kühlbetrieb ausgelegten Ventil 120 auch für einen Heizbetrieb zu verwenden. Im Heizbetrieb wird das Ventil 120 bei einem Temperaturanstieg infolge der Aufwärtsbewegung der Spitze des Zapfens 52 geschlossen, sodass weniger Heizmittel durch den Wärmetauscher fliesst und die Heizleistung verringert wird. Bei einem Temperaturabfall wird das Ventil 120 folglich geöffnet und die Heizleistung erhöht. Auch hier könnte, um mit dem Thermostatkopf 50 sowohl im Heiz- als auch im Kühlbetrieb zu verwenden, eine Bewegungsumlenkvorrichtung samt Umschaltvorrichtung der beschriebenen Art integriert werden.

In Abwandlung der dargestellten Beispiele könnten selbstverständlich auch zwei verschiedene Thermostatköpfe in einem einzigen Gehäuse untergebracht werden, wobei einer für den Heizbetrieb und der andere für den Kühlbetrieb am jeweiligen Wärmetauscherventil verwendet wird und jeder über jeweils eigene Befestigungsmittel zur Befestigung am Wärmetauscherventil verfügt. Hierbei könnten die beiden Thermostatköpfe entweder beide komplett ausgerüstet sein oder die beiden Thermostatköpfe könnten sich einzelne Elemente wie beispielsweise den Dehnstoff samt Behälter teilen.

Bei den beschriebenen Beispielen sind der Thermostatkopf und das Wärmetauscherventil jeweils als eigenständige Vorrichtungen dargestellt. Selbstverständlich ist es jedoch auch möglich, den Thermostatkopf samt Ventil in einem gemeinsamen Gehäuse unter zu bringen, welches dann am Wärmetauscher befestigt werden kann. Es ist natürlich auch denkbar, dass der Thermostatkopf samt Ventil gleich in den Wärmetauscher integriert wird.

Zusammenfassend ist festzustellen, dass es die Erfindung erlaubt, einen Wärmetauscher, dessen Ventil entweder für einen Heiz- oder einen Kühlbetrieb ausgebildet ist, auch für den jeweilig anderen Betrieb zu verwenden und den Durchfluss des Heiz- bzw. Kühlmittels jeweils korrekt zu regulieren.

## Patentansprüche

1. Thermostatkopf zur Betätigung eines Ventils (20) zur Steuerung einer Durchflussmenge eines Fluids durch einen Wärmetauscher, mit einem Dehnstoffelement (2), welches eine Volumenvergrösserung ausschliesslich bei einem Umgebungstemperaturanstieg und eine Volumenverringerung des Dehnstoffelements ausschliesslich bei einem Umgebungstemperaturabfall (2) erfährt, wobei der Thermostatkopf
a) Ventilbetätigungsmittel zum Öffnen bzw. Schliessen des Ventils (20),
b) Kopplungsmittel (3, 31) für eine bewegungsmässige Kopplung des Dehnstoffelements (2) mit den Ventilbetätigungsmitteln sowie
c) an einem Ende des Thermostatkopfs Befestigungsmittel (8) zum Befestigen des Thermostatkopfs am Ventil (20) umfasst,
**dadurch gekennzeichnet, dass**
d) der Thermostatkopf weiter Umschaltmittel (85) für eine Umschaltung zwischen einem Heizbetrieb und einem Kühlbetrieb umfasst,
e) wobei die Kopplungsmittel Mittel zur Bewegungsumlenkung umfassen und der Thermostatkopf zwischen Heizbetrieb und Kühlbetrieb umschaltbar ist, indem die Mittel zur Bewegungsumlenkung durch Betätigen der Umschaltmittel wahlweise arretierbar bzw. eine Arretierung der Mittel zur Bewegungsumlenkung aufhebbar ist,
f) die Ventilbetätigungsmittel genau einen Stössel (32) umfassen und mit den Kopplungsmitteln (3, 31) wahlweise
g) im Heizbetrieb bei einem Umgebungstemperaturrückgang eine Bewegung des Stössels (32) vom Ende des Thermostatkopfs mit den Befestigungsmitteln (8) weg und bei einem Umgebungstemperaturanstieg eine Bewegung des Stössels (32) zum Ende des Thermostatkopfs mit den Befestigungsmitteln (8) hin erzeugbar ist,
h) und im Kühlbetrieb bei einem Umgebungstemperaturrückgang eine Bewegung des Stössels (32) zum Ende des Thermostatkopfs mit den Befestigungsmitteln (8) hin und im Kühlbetrieb bei einem Umgebungstemperaturanstieg eine Bewegung des Stössels (32) vom Ende des Thermostatkopfs mit den Befestigungsmitteln (8) weg erzeugbar ist.

2. Thermostatkopf nach Anspruch 1, wobei die Umschaltmittel für eine automatische Umschaltung zwischen Heizbetrieb und Kühlbetrieb ausgebildet sind.

3. Thermostatkopf nach einem der Ansprüche 1 oder 2, wobei ereine Einstellfeder sowie Einstellmittel, insbesondere einen Drehgriff (6), zur Veränderung einer Vorspannung der Einstellfeder zur Einstellung einer Soll-Temperatur umfasst.

4. Thermostatkopf nach einem der Ansprüche 1 bis 3, wobei das Dehnstoffelement ein Fluid oder einen Festkörper umfasst.

5. Thermostatkopf nach einem der Ansprüche 1 bis 4, wobei er ein Gehäuse und einen vom Gehäuse abgesetzten Fernfühler umfasst, ein erster Anteil des Dehnstoffelements in das Gehäuse und ein zweiter Anteil des Dehnstoffelements in den Fernfühler integriert ist und der Fernfühler mit dem Gehäuse durch ein Kapillarrohr verbunden ist.

6. Thermostatkopf nach einem der Ansprüche 1 bis 5, wobei die Kopplungsmittel ein hydraulisches oder ein mechanisches Getriebe umfassen.

7. Thermostatkopf nach Anspruch 6, wobei die Kopplungsmittel ein mechanisches Getriebe umfassen, welches einen Hebelmechanismus und/oder einen Zahnstangen/Zahnrad-Mechanismus aufweist.

8. Thermostatkopf nach einem der Ansprüche 1 bis 7, wobei sich das Dehnstoffelement in einem Behälter aus einem Material mit einem höheren Wärmeausdehnungskoeffizienten als das Dehnstoffelement befindet.

9. Verwendung eines Thermostafkopfes nach einem der Ansprüche 1 bis 8 zur Steuerung der Durchflussmenge einer Flüssigkeit durch den Wärmetauscher.

## Claims

1. Thermostatic head for actuating a valve (20) for controlling a flow quantity of a fluid through a heat exchanger, with an expansion element (2) which undergoes an increase in volume solely in the event of a rise in ambient temperature and a decrease in volume of the expansion element (2) solely in the event of a drop in ambient temperature, wherein the thermostatic head comprises
a) valve actuating means for opening or closing the valve (20)
b) coupling means (3, 31) for coupling the expansion element (2) to the valve actuating means in terms of movement and
c) fastening means (8) at one end of the thermostatic head for fastening the thermostatic head to the valve (20),
**characterised in that**
d) the thermostatic head also comprises switch-over means (85) for switching over between a heating mode and a cooling mode,
e) wherein the coupling means comprise means for movement reversal and the thermostatic head can be switched over between heating mode and cooling mode **in that** optionally the means for movement reversal can be locked by actuating the switch-over means or locking of the means for movement reversal can be discontinued,
f) the valve actuating means comprise precisely one lifter (32) and optionally, with the coupling means (3, 31),
g) in heating mode in the event of a decrease in ambient temperature a movement of the lifter (32) away from the end of the thermostatic head with the fastening means (8) can be produced and in the event of a rise in ambient temperature a movement of the lifter (32) towards the end of the thermostatic head with the fastening means (8) can be produced,
h) and in cooling mode in the event of a decrease in ambient temperature a movement of the lifter (32) towards the end of the thermostatic head with the fastening means (8) can be produced and in cooling mode in the event of a rise in ambient temperature a movement of the lifter (32) away from the end of the thermostatic head with the fastening means (8) can be produced.

2. Thermostatic head according to Claim 1, wherein the switch-over means are formed for an automatic switch-over between heating mode and cooling mode.

3. Thermostatic head according to either of Claims 1 and 2, wherein it comprises a setting spring and setting means, in particular a turning handle (6) for changing a bias of the setting spring for setting a desired temperature.

4. Thermostatic head according to any one of Claims 1 to 3, wherein the expansion element comprises a fluid or a solid.

5. Thermostatic head according to any one of Claims 1 to 4, wherein it comprises a housing and a precision sensor offset from the housing, a first portion of the expansion element is integrated into the housing and a second portion of the expansion element is integrated into the precision sensor and the precision sensor is connected to the housing through a capillary tube.

6. Thermostatic head according to any one of Claims 1 to 5, wherein the coupling means comprise a hydraulic or a mechanical transmission.

7. Thermostatic head according to Claim 6, wherein the coupling means comprise a mechanical transmission which has a lever mechanism and/or a rack-gear mechanism.

8. Thermostatic head according to any one of Claims 1 to 7, wherein the expansion element is located in a container of a material with a higher coefficient of thermal expansion than the expansion element.

9. Use of a thermostatic head according to any one of Claims 1 to 8 for controlling a flow quantity of a fluid through a heat exchanger.

## Revendications

1. Tête thermostatique servant à actionner une soupape (20) pour commander un débit d'un fluide par un échangeur de chaleur, avec un élément en matériau dilatable (2) qui subit une augmentation de volume exclusivement lors d'une hausse de la température ambiante et une réduction de volume de l'élément en matériau dilatable exclusivement lors d'une baisse de la température ambiante (2), la tête thermostatique comprenant
a) des moyens d'actionnement de la soupape servant à ouvrir ou fermer la soupape (20),
b) des moyens d'accouplement (3, 31) pour un accouplement de mouvement de l'élément en matériau dilatable (2) avec les moyens d'actionnement de la soupape, ainsi que
c) des moyens de fixation (8) servant à fixer la tête thermostatique sur la soupape (20) au niveau d'une extrémité de la tête thermostatique,
**caractérisée en ce que**
d) la tête thermostatique comprend encore des moyens de commutation (85) pour une commutation entre un mode de chauffage et un mode de refroidissement,
e) les moyens d'accouplement comprenant des moyens de déviation du mouvement et la tête thermostatique pouvant être commutée entre le mode de chauffage et le mode de refroidissement **en ce que** les moyens de déviation du mouvement peuvent être bloqués au choix en actionnant les moyens de commutation ou un blocage des moyens de déviation du mouvement peut être supprimé,
f) les moyens d'actionnement de la soupape comprennent précisément un poussoir (32) et les moyens d'accouplement (3, 31) effectuent au choix
g) en mode de chauffage lors d'une baisse de la température ambiante, un mouvement du poussoir (32) loin de l'extrémité de la tête thermostatique dotée des moyens de fixation (8) peut être généré et lors d'une hausse de la température ambiante, un mouvement du poussoir (32) vers l'extrémité de la tête thermostatique dotée des moyens de fixation (8) peut être généré,
h) et en mode de refroidissement lors d'une baisse de la température ambiante, un mouvement du poussoir (32) vers l'extrémité de la tête thermostatique dotée des moyens de fixation (8) peut être généré et lors d'une hausse de la température ambiante, un mouvement du poussoir (32) loin de l'extrémité de la tête thermostatique dotée des moyens de fixation (8) peut être généré.

2. Tête thermostatique selon la revendication 1, dans laquelle les moyens de commutation sont réalisés pour une commutation automatique entre le mode de chauffage et le mode de refroidissement.

3. Tête thermostatique selon l'une quelconque des revendications 1 ou 2, dans laquelle elle comprend un ressort de réglage ainsi que des moyens de réglage, en particulier une poignée toumante (6), pour modifier une précontrainte du ressort de réglage afin de régler une température de consigne.

4. Tête thermostatique selon l'une quelconque des revendications 1 à 3, dans laquelle l'élément en matériau dilatable comprend un fluide ou un solide.

5. Tête thermostatique selon l'une quelconque des revendications 1 à 4, dans laquelle elle comprend un boîtier et un télédétecteur décalé du boîtier, une première partie de l'élément en matériau dilatable est intégrée dans le boîtier et une seconde partie de l'élément en matériau dilatable dans le télédétecteur et le télédétecteur est relié au boîtier par un tube capillaire.

6. Tête thermostatique selon l'une quelconque des revendications 1 à 5, dans laquelle les moyens d'accouplement comprennent un engrenage hydraulique ou un engrenage mécanique.

7. Tête thermostatique selon la revendication 6, dans laquelle les moyens d'accouplement comprennent un engrenage mécanique qui présente un mécanisme de levage et/ou un mécanisme à crémaillère/roue dentée.

8. Tête thermostatique selon l'une quelconque des revendications 1 à 7, dans laquelle l'élément en matériau dilatable se trouve dans un réservoir en un matériau présentant un coefficient de dilatation thermique plus élevé que l'élément en matériau dilatable.

9. Utilisation d'une tête thermostatique selon l'une quelconque des revendications 1 à 8 servant à commander le débit d'un liquide par l'échangeur de chaleur.
